# EUROPÄISCHE PATENTANMELDUNG

(11) **EP 3 796 280 A1**
(43) Veröffentlichungstag der Anmeldung: **24.03.2021**
(21) Anmeldenummer: 20191050.2
(22) Anmeldetag: 14.08.2020
(51) Int. Cl.: G08B 13/16, G08B 21/04, G08B 25/10, H04L 12/28

(54) **HEIMAUTOMATIONSSYSTEM**

(30) Priorität: 17.09.2019 DE 102019124992
(71) Anmelder: Innogy SE, 45128 Essen (DE)
(72) Erfinder: Becker, Dr. Gernot, 44269 Dortmund (DE)
(74) Vertreter: Cohausz & Florack

(57) **Zusammenfassung**

Die Anmeldung betrifft ein Hausautomationssystem (100) für ein Gebäude (108), umfassend mindestens eine Hausautomationssteuervorrichtung (102, 302), und mindestens eine mit der Hausautomationssteuervorrichtung (102, 302) kommunikativ verbundene Körperschalldetektionsvorrichtung (104, 204), wobei die Körperschalldetektionsvorrichtung (104, 204) zumindest an einer Gebäudewand (110, 210) des Gebäudes (108) angeordnet ist, und wobei die Körperschalldetektionsvorrichtung (104, 204) eingerichtet ist zum Erfassen mindestens eines über die mindestens eine Gebäudewand (110, 210) übertragenen Körperschallsignals.

## Beschreibung

Die Anmeldung betrifft ein Hausautomationssystem mit einer Hausautomationssteuervorrichtung. Darüber hinaus betrifft die Anmeldung ein Verfahren zum Betreiben eines Hausautomationssystems.

Zum Schutz von Gebäuden, wie Wohnhäuser oder Bürogebäude, ist der Einsatz von Einbruchschutzsystemen bekannt. Ein Einbruchsschutzsystem verfügt in der Regel über einen zentralen Kontroller und eine Vielzahl von Einbruchssensoren, die kommunikativ mit dem zentralen Kontroller verbunden sind.

So ist bei bekannten Einbruchschutzsystemen normalerweise an jeder Außentür und jedem Fenster jeweils mindestens ein Einbruchssensor (z.B. ein Bewegungsmelder, ein Tür- und/oder Fensterkontaktsensor, ein Erschütterungssensor etc.) angeordnet, der insbesondere eingerichtet ist zum Detektieren einer Einbruchsaktion bzw. - aktivität, also insbesondere zum Detektieren eines unerlaubten Öffnens einer Außentür oder eines Fensters. Ein Einbruchssensor kann insbesondere batteriebetrieben sein. Wird ein unerlaubtes Öffnen einer Außentür oder eines Fensters von einem Einbruchssensor detektiert, wird dies dem Kontroller über die Kommunikationsverbindung gemeldet. Der Kontroller gibt daraufhin in bekannter Weise ein Alarmsignal aus.

Zusätzlich ist es bei modernen Einbruchschutzsystemen bekannt, Luftschallsensoren zu installieren. Ein Luftschallsensor ist in der Regel auf ein oder mehr Fenster ausgerichtet, um insbesondere ein Zersplittern der Fensterscheibe oder dergleichen zu detektieren. Hierbei werden Luftschallwellen erfasst und anschließend ausgewertet.

Nachteilig an den bekannten Einbruchschutzsystemen ist die Vielzahl an zu installierenden Bauelementen. Neben dem mindestens einen zentralen Kontroller müssen für einen ausreichenden Schutz normalerweise für jedes Fenster und jede Außentür mindestens ein Einbruchssensor installiert und mit dem Kontroller kommunikativ verbunden werden. Dies führt nicht nur zu einem hohen Installationsaufwand, sondern auch zu einem hohen Wartungsaufwand (z.B. regelmäßiger Austausch der jeweiligen Batterie).

Daher liegt der Anmeldung die Aufgabe zugrunde, eine Möglichkeit zu schaffen, welche zumindest den Installationsaufwand bei einem Einbruchsschutzsystem zumindest reduziert, ohne dass die Sicherheit reduziert wird.

Die Aufgabe wird gemäß einem ersten Aspekt der Anmeldung gelöst durch ein Hausautomationssystem für ein Gebäude nach Anspruch 1. Das Hausautomationssystem umfasst mindestens eine Hausautomationssteuervorrichtung. Das Hausautomationssystem umfasst mindestens eine mit der Hausautomationssteuervorrichtung kommunikativ verbundene Körperschalldetektionsvorrichtung. Die Körperschalldetektionsvorrichtung ist zumindest an einer Gebäudewand des Gebäudes angeordnet. Die Körperschalldetektionsvorrichtung ist eingerichtet zum Erfassen mindestens eines über die mindestens eine Gebäudewand übertragenen Körperschallsignals.

Indem im Gegensatz zum Stand der Technik als Einbruchschutzsystem ein Hausautomationssystem mit (genau) einer Körperschalldetektionsvorrichtung, die zumindest an einer Gebäudewand des zu überwachenden Gebäudes angeordnet ist, bereitgestellt wird, wird der Installationsaufwand bei einem Einbruchsschutzsystem zumindest reduziert. Insbesondere kann die Anzahl an erforderlichen Einbruchssensoren signifikant reduziert werden. Hierdurch kann neben dem Installationsaufwand auch der Wartungsaufwand deutlich reduziert werden. Zudem kann durch die anmeldungsgemäße Kombination einer Hausautomationssteuervorrichtung, welche insbesondere die Funktion eines zentralen Kontrollers bereitstellt, mit der Körperschalldetektionsvorrichtung auf einen zusätzlichen zentralen Kontroller verzichtet werden. Schließlich kann trotz der Bauteilreduktion ein hohes Sicherheitsniveau bereitgestellt werden.

Das anmeldungsgemäße Hausautomationssystem ist für eine Installation in einem Gebäude, wie einem Wohngebäude oder einem Bürogebäude, eingerichtet. Das Hausautomationssystem dient zum einen als Einbruchsschutzsystem und zum anderen zum Steuern von mindestens einem (intelligenten) Verbraucher des Gebäudes.

Das anmeldungsgemäße Hausautomationssystem weist eine (zentrale) Hausautomationssteuervorrichtung. Eine Hausautomationssteuervorrichtung ist insbesondere eingerichtet zum Steuern von mindestens einem (elektrischen) Verbraucher (z.B. Zuflussventil eines Heizkörpers, Verschattungsvorrichtung, Beleuchtungsvorrichtung etc.) des Gebäudes und/oder zum Auswerten von Sensordaten von einem Gebäudesensor (z.B. Temperatursensor, Helligkeitssensor etc.). Insbesondere kann der mindestens eine Verbraucher durch die (lokale) Hausautomationssteuervorrichtung gesteuert werden, abhängig z.B. von den ausgewerteten Sensordaten, externen Messdaten (z.B. meteorologischen Daten) und/oder Nutzervorgaben.

Ein Gebäude ist aus einer festen Bausubstanz gebildet und umfasst in der Regel eine Mehrzahl von Gebäudewänden. Eine Gebäudewand ist vorliegend insbesondere eine (vertikale) Seitenwand, ein (horizontaler) Boden, eine (horizontale) Decke und/oder ein Dachbereich.

Anmeldungsgemäß umfasst das Hausautomationssystem eine Körperschalldetektionsvorrichtung. Die Körperschalldetektionsvorrichtung ist eingerichtet zum Erfassen von Köperschall bzw. Körperschallwellen (und nicht von Luftschallwellen). Hierzu ist die Körperschalldetektionsvorrichtung, die vorzugsweise einen Körperschallsensor aufweist, zumindest an mindestens einer Gebäudewand angeordnet. Dies meint insbesondere, dass die Körperschalldetektionsvorrichtung die Gebäudewand zumindest teilweise direkt kontaktiert. Die Körperschalldetektionsvorrichtung, insbesondere der Körperschallsensor, ist eingerichtet zum Erfassen mindestens eines über die mindestens eine Gebäudewand übertragenen Körperschallsignals (bzw. Körperschallwelle).

Insbesondere bei einem Einbruch rufen entsprechende Aktivitäten einen Körperschall in der Mehrzahl von Gebäudewänden bzw. der festen Bausubstanz des Gebäudes hervor. Das Einschlagen eines Fensters, das Aufbrechen einer Tür oder eine ähnliche Einbruchsaktion zum unerlaubten Öffnens einer Tür oder eines Fensters kann insbesondere ein spezifisches Körperschallsignal (z.B. in Form eines oder mehrerer Schallimpuls(e)) auslösen. Das Körperschallsignal breitet sich durch die gesamte feste Bausubstanz bzw. durch vorzugsweise sämtliche Gebäudewände aus. Das Körperschallsignal kann durch die an einer Gebäudewand zumindest befestigten Körperschalldetektionsvorrichtung erfasst und insbesondere an die Hausautomationssteuervorrichtung übermittelt werden.

Insbesondere ist anmeldungsgemäß eine Kommunikationsverbindung zwischen der Hausautomationssteuervorrichtung und der Körperschalldetektionsvorrichtung vorgesehen. Die Kommunikationsverbindung ist insbesondere eine drahtlose Kommunikationsverbindung (z.B. basierend auf der Bluetooth-Technologie, WLAN-Technologie etc.) vorgesehen. Vorzugsweise kann mindestens ein lokales Netzwerk bzw. Kommunikationsnetz in dem Hausautomationssystem implementiert sein.

Es versteht sich, dass bei anderen Varianten auch eine drahtgebundene Verbindung vorgesehen sein kann.

Vorzugsweise kann genau eine Körperschalldetektionsvorrichtung vorgesehen sein. Es versteht sich, dass insbesondere in Abhängigkeit der Dimension eines Gebäudes auch zwei oder drei Körperschalldetektionsvorrichtungen vorgesehen sein können, die jeweils mit der Körperschalldetektionsvorrichtung kommunikativ verbunden sein können.

Gemäß einer ersten Ausführungsform des Hausautomationssystems kann die Hausautomationssteuervorrichtung mindestens ein Auswertemodul (z.B. ein ausführbares Softwaremodul) aufweisen. Das Auswertemodul kann eingerichtet sein zum Auswerten des durch die Körperschalldetektionsvorrichtung erfassten Köperschallsignals, insbesondere basierend auf mindestens einem Auswertekriterium.

Vorzugsweise kann ein erfasstes Köperschallsignals bzw. ein entsprechender Datensatz an die Hausautomationssteuervorrichtung (in geeigneter Form) über die genannte Kommunikationsverbindung übertragen werden. Bevorzugt bei Empfang eines solchen Datensatzes kann das Auswertemodul aktiviert werden und eine Auswertung des Köperschallsignals bzw. Datensatzes durchführen, insbesondere basierend auf einem oder mehreren Auswertekriterium/kriterien. Beispielsweise kann das mindestens eine Auswertekriterium vorgegeben sein und vorzugsweise unzulässige (oder zulässige) Körperschallsignalbereich(e) definieren. Eine Auswertung kann insbesondere ein Vergleichen eines erfassten Körperschallsignals (insbesondere ein Frequenzsignal (z.B. ein Frequenzspektrum)) mit dem mindestens einen, beispielsweise unzulässigen, Körperschallsignalbereich umfassen.

Bei anderen Varianten der Anmeldung kann das Auswertemodul auch in einer entfernt angeordneten Rechenvorrichtung (z.B. von einem Backendsystem) implementiert sein. In diesem Fall kann die Hausautomationssteuervorrichtung ein erfasstes Köperschallsignal bzw. einen entsprechenden Datensatz vorzugsweise über ein Fernkommunikationsnetz (z.B. Internet) an das Backenendsystem übertragen. Das Auswertemodul kann dann in zuvor beschriebener Weise eine Auswertung durchführen.

Gemäß einer bevorzugten Ausführungsform des Hausautomationssystems kann das Hausautomationssystem mindestens eine durch die Hausautomationssteuervorrichtung zumindest zugreifbare Speichereinrichtung umfassen. Die Speichereinrichtung kann vorzugsweise in der Hausautomationssteuervorrichtung integriert sein oder als externe Speichereinrichtung an dieser angeschlossen sein. Bei anderen Varianten der Anmeldung kann die Hausautomationssteuervorrichtung über ein Fernkommunikationsnetz auf die Speichereinrichtung (z.B. in Form einer Cloud oder dergleichen) zugreifen.

Die Speichereinrichtung kann eingerichtet sein zum Speichern von mindestens einem Schallsignalmuster als Auswertekriterium. Vorzugsweise kann eine Vielzahl von unzulässigen (und/oder zulässigen) Schallsignalmustern gespeichert sein. Ein Schallsignalmuster kann insbesondere ein Frequenzmuster sein. Vorzugsweise können für eine Vielzahl von potentiellen Einbruchsaktivitäten (z.B. Einschlagen eines Fensters, Aufbrechen einer Tür etc.) resultierende Körperschallsignale als Schallsignalmuster gespeichert sein.

Das Auswertemodul kann eingerichtet sein zum Auswerten des durch die Körperschalldetektionsvorrichtung erfassten Köperschallsignals durch Vergleichen des erfassten Köperschallsignals mit dem mindestens einen gespeicherten Schallsignalmuster. Wenn beispielsweise bei dem Vergleich eine (im Wesentlichen) Übereinstimmung oder zumindest eine hinreichende Ähnlichkeit (z.B. mit einer Toleranz von 5 % oder dergleichen) detektiert wird, kann als Auswerteergebnis ein Einbruchsversuch festgestellt werden. In zuverlässigerer Weise kann ein Einbruchsversuch detektiert werden. Es versteht sich, dass alternativ oder zusätzlich Schallsignalmuster von Nicht-Einbruchsaktivitäten gespeichert sein können, also von Aktivitäten, die nicht von einem Einbruchsversuch stammen.

Gemäß einer weiteren Ausführungsform des anmeldungsgemäßen Hausautomationssystems kann das Hausautomationssystem in einem Kalibrierungsmodus betreibbar sein. Beispielsweise kann das Hausautomationssystem durch eine Nutzeraktion in den Kalibrierungsmodus gesetzt werden.

Die Hausautomationssteuervorrichtung kann mindestens ein Schallmusteraufzeichnungsmodul aufweisen. In dem Kalibrierungsmodus kann das Schallmusteraufzeichnungsmodul eingerichtet sein zum Aufzeichnen mindestens eines Schallsignalmusters, das durch mindestens eine Simulationsaktion ausgelöst wird. Das Aufzeichnen des Schallsignalmusters kann insbesondere ein Speichern eines durch die Körperschalldetektionsvorrichtung erfassten Körperschallsignals als Schallsignalmuster in der Speichereinrichtung umfassen. Die Simulationsaktion kann vorzugsweise eine simulierte Einbruchsaktion sein. Insbesondere kann eine Einbruchsaktivität simuliert werden und das resultierende Körperschallsignal als (unzulässiges) Schallsignalmuster gespeichert werden (und insbesondere dann bei einer zuvor beschriebenen Auswertung verwendet werden). Hierdurch können insbesondere die Eigenheit des Gebäudes bzw. der festen Bausubstanz des Gebäudes bei der Auswertung berücksichtigt werden. Die Zuverlässigkeit der Auswertung kann durch die vorherige Durchführung einer Kalibrierungsphase noch weiter verbessert werden. Es versteht sich, dass alternativ oder zusätzlich zu der mindestens einen Einbruchsaktivität mindestens eine Nicht-Einbruchsaktivität simuliert werden kann und das jeweils resultierende Körperschallsignal als (zulässiges) Schallsignalmuster gespeichert werden können.

Wie bereits beschrieben wurde, kann die Hausautomationssteuervorrichtung mindestens ein Auswertemodul umfassen. Das Auswertemodul kann vorzugsweise ein KI (Künstliche Intelligenz)-Modul sein, insbesondere in Form eines neuronalen Netzwerks. Insbesondere kann das KI-Modul ein selbstlernendes Modul sein. Die Auswertung kann während des Betriebs des Hausautomationssystems noch weiter verbessert werden.

Basierend auf der Auswertung bzw. dem Auswerteergebnis, kann, gemäß einer weiteren Ausführungsform des Hausautomationssystems, das Auswertemodul eingerichtet sein zum Bewirken eines Ausgebens eines Alarmsignals. Beispielsweise kann ein Alarmgeber angesteuert werden, ein Alarmsignal an mindestens ein Nutzerendgerät (z.B. Tablet-Computer, Smartphone etc.) eines Nutzers ausgesendet werden und/oder die Polizei (und/oder ein privater Wachdienst) durch die Hausautomationssteuervorrichtung informiert werden.

Gemäß einer besonders bevorzugten Ausführungsform des anmeldungsgemäßen Hausautomationssystems kann das Auswertemodul eingerichtet sein zum Bewirken eines Ausführens mindestens einer vorbestimmten Aktion in Abhängigkeit des Auswerteergebnisses. Dies meint insbesondere, dass eine vorbestimmte Aktion durch das Auswertemodul veranlasst wird, wenn bei der Auswertung festgestellt wurde, dass zumindest ein potentieller Einbruchsversuch vorliegt.

Die mindestens eine vorbestimmte Aktion kann ein Aktivieren mindestens eines (elektrischen) Verbrauchers des Gebäudes sein. Beispielsweise kann das Auswertemodul eine Ansteuerung des mindestens einen Verbrauchers bewirken. Beispielsweise kann ein Steuersignal an den mindestens einen Verbraucher ausgesendet werden. Das Steuersignal kann einen Aktivierungsbefehl umfassen. Vorzugsweise kann die vorbestimmte Aktion das Aktivieren von zumindest zwei (unterschiedlichen) elektrischen Verbrauchern umfassen. Eine vorbestimmte Aktion kann insbesondere in Form einer Regel implementiert sein.

Der mindestens eine elektrische Verbraucher kann insbesondere ein Fernsehgerät, eine Beleuchtungsvorrichtung und/oder eine Verschattungsvorrichtung sein. Vorzugsweise kann eine Mehrzahl von Verbrauchern aktiviert werden. Der Vorteil der Aktivierung eines Fernsehgeräts, einer Beleuchtungsvorrichtung und/oder einer Verschattungsvorrichtung liegt insbesondere darin, dass ein potentieller Einbrecher gestört wird (und deshalb den Einbruchsversuch abbricht). Die Aktivierung mindestens einer Verschattungsanlage, insbesondere das Herunterfahren mindestens eines Rollladens, besitzt den weiteren Vorteil, dass das unerlaubte Eindringen hierdurch weiter erschwert werden kann.

Es versteht sich, dass weitere elektrische Verbraucher, wie ein Radiogerät (oder dergleichen), eine Sprinkleranlage etc. durch eine vorbestimmte Aktion in Abhängigkeit des Auswerteergebnis ansteuerbar sein können.

Gemäß einer weiteren bevorzugten Ausführungsform des anmeldungsgemäßen Hausautomationssystems kann die Körperschalldetektionsvorrichtung ein zylinderförmiges Gehäuse aufweisen. Anders ausgedrückt kann die Körperschalldetektionsvorrichtung stiftförmig bzw. rohrförmig gebildet sein. In dem zylinderförmigen Gehäuse können mindestens ein Körperschallsensor (z.B. ein Piezoelement) und mindestens eine (drahtlose) Kommunikationsschnittstelle integriert sein. Insbesondere kann eine drahtlose Kommunikationsschnittstelle (z.B. mit einer Antenne und einem Schnittstellenkontroller) vorgesehen sein, um insbesondere ein durch den Körperschallsensor erfasstes Köperschallsignal auszusenden.

Ferner kann, gemäß einer weiteren Ausführungsform des anmeldungsgemäßen Hausautomationssystems, die Körperschalldetektionsvorrichtung in der Gebäudewand integriert sein. Insbesondere kann die Körperschalldetektionsvorrichtung, die ein zylinderförmiges Gehäuse aufweist, in einem in der Gebäudewand gebildeten Bohrloch eingesetzt sein. Der Außendurchmesser des zylinderförmigen Gehäuses kann zu dem Innendurchmesser des Bohrlochs korrespondierend, also insbesondere im Wesentlichen übereinstimmen. Dies erlaubt einen besonders guten Kontakt mit der festen Bausubstanz. Zudem ist in diesem Fall eine (nahezu) unsichtbare Montage möglich. Anders ausgedrückt kann die Körperschalldetektionsvorrichtung nahezu nicht sichtbar sein.

Ferner ist erkannt worden, dass für eine zuverlässige Detektion einer Einbruchsaktivität und für eine Reduzierung der erforderlichen Anzahl an Körperschalldetektionsvorrichtungen (vorzugsweise auf genau eine Körperschalldetektionsvorrichtung) die Körperschalldetektionsvorrichtung im Wesentlichen in einem Gebäudezentrumsbereich des zu überwachenden Gebäudes angeordnet sein kann. Hierdurch kann der Laufweg einer Körperschallwelle von sämtlichen Außenwänden des Gebäudes (an denen die Körperschallwelle aufgrund einer Einbruchsaktivität entstehen kann) nahezu gleich lang sein.

Gemäß einer weiteren besonders bevorzugten Ausführungsform des anmeldungsgemäßen Hausautomationssystems kann die Körperschalldetektionsvorrichtung mindestens einen ersten Körperschallsensor und mindestens einen zweiten Körperschallsensor aufweisen. Der erste Körperschallsensor kann angeordnet sein zum Erfassen von sich in einer ersten Ebene ausbreitenden Körperschallwellen. Der zweite Körperschallsensor kann angeordnet sein zum Erfassen von sich in einer zweiten Ebene ausbreitenden Körperschallwellen, wobei die zweite Ebene im Wesentlichen senkrecht zu der ersten Ebene ist. Hierdurch kann die Überwachung noch weiter verbessert werden.

Es versteht sich, dass anstelle einer Körperschalldetektionsvorrichtung mit den beschrieben ersten und zweiten Körperschallsensor auch zwei Körperschalldetektionsvorrichtungen vorgesehen sein können, wobei eine erste Körperschalldetektionsvorrichtung den ersten Körperschallsensor und die weitere Körperschalldetektionsvorrichtung den zweiten Körperschallsensor aufweist. Die beiden Körperschalldetektionsvorrichtungen können vorzugsweise benachbart zueinander angeordnet sein.

Auch können zwei Körperschallsensoren eingerichtet zum Erfassen von Longitudinalwellen vorgesehen sein.

Vorzugsweise kann eine Körperschalldetektionsvorrichtung zur Energieversorgung über eine Batterie verfügen. Es versteht sich, dass andere Energieversorgungen implementiert sein können.

Es versteht sich ferner, dass insbesondere die Auswertung von Körperschallsignalen bei dem Hausautomationssystem aktivierbar und deaktivierbar sein kann, beispielsweise durch einen Nutzer. Anders ausgedrückt kann das Einbruchschutzsystem bzw. Alarmsystem des Hausautomationssystem einschaltbar und ausschaltbar sein.

Ein weiterer Aspekt der Anmeldung ist ein Verfahren zum Betreiben eines Hausautomationssystems, insbesondere eines zuvor beschriebenen Hausautomationssystems. Das Verfahren umfasst:
- Erfassen eines über mindestens eine Gebäudewand übertragenen Körperschallsignals,
- Auswerten, durch ein Auswertemodul einer Hausautomationssteuervorrichtung, des erfassten Köperschallsignals, basierend auf mindestens einem Auswertekriterium, und
- Ausführen mindestens einer vorbestimmten Aktion in Abhängigkeit des Auswerteergebnisses.

Das Verfahren kann zumindest teilweise in einem Computerprogramm implementiert sein. Das Computerprogramm umfasst insbesondere Softwarecode, der so angepasst ist, dass, wenn der Softwarecode durch einen Prozessor (insbesondere der Hausautomationssteuervorrichtung) ausgeführt wird, zumindest einer der zuvor beschriebenen Verfahrensschritte (insbesondere der Auswerteschritt) durchgeführt wird.

Ein zuvor beschriebenes Modul bzw. eine zuvor beschriebene Einrichtung oder Vorrichtung kann zumindest teilweise Hardwareelemente (z.B. Prozessor, Speichermittel etc.) und/oder zumindest teilweise Softwareelemente (z.B. ausführbaren Code) umfassen.

Die Merkmale der Hausautomationssysteme und Verfahren sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Hausautomationssystem und das anmeldungsgemäße Verfahren auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Hausautomationssystems gemäß der vorliegenden Anmeldung,
- Fig. 2: eine schematische Ansicht eines Ausführungsbeispiels einer Körperschalldetektionsvorrichtung gemäß der vorliegenden Anmeldung,
- Fig. 3: eine schematische Ansicht eines Ausführungsbeispiels einer Hausautomationssteuervorrichtung gemäß der vorliegenden Anmeldung, und
- Fig. 4: ein Diagramm eines Ausführungsbeispiels eines Verfahrens gemäß der vorliegenden Anmeldung.

Nachfolgend werden für gleiche Elemente gleiche Bezugszeichen verwendet.

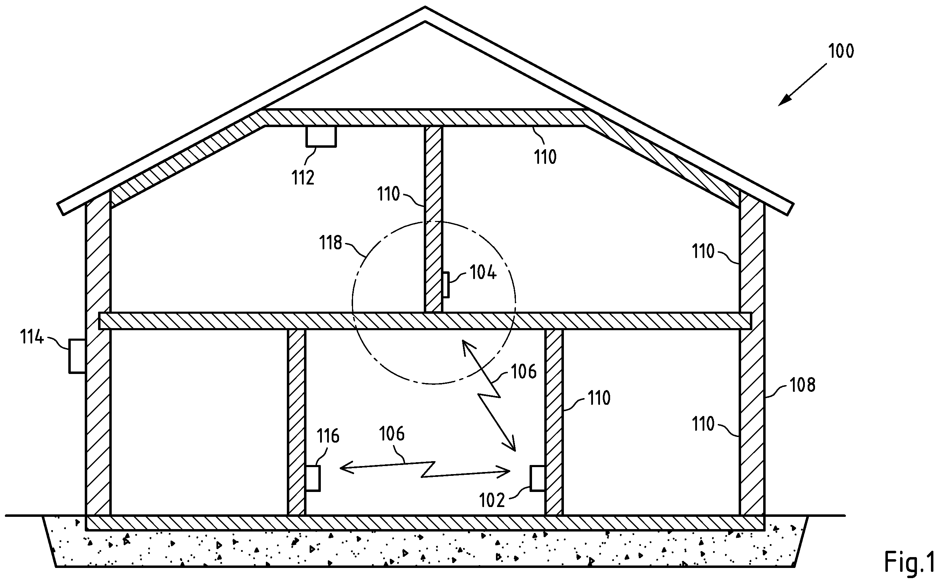

Die Figur 1 zeigt eine schematische Ansicht eines Ausführungsbeispiels eines Hausautomationssystems 100 gemäß der vorliegenden Anmeldung. Das Hausautomationssystem 100 ist in bzw. an einem beispielhaft dargestellten Gebäude 108 installiert. Das Gebäude wird durch eine feste Bausubstanz 110 gebildet, insbesondere durch eine Mehrzahl von Gebäudewänden 110 (z.B. Seitenwände, Decken, Böden, Dach etc.). Das Gebäude kann mindestens eine (nicht gezeigte) Tür und/oder mindestens ein nicht gezeigtes Fenster aufweisen.

Das dargestellte Hausautomationssystem 100 weist eine Hausautomationssteuervorrichtung 102 auf. Die Hausautomationssteuervorrichtung 102 ist insbesondere zum Steuern und/oder Regeln von mindestens einem (intelligenten) Verbraucher bzw. steuerbaren Aktor eingerichtet. Beispielhaft sind eine steuerbare Innenbeleuchtungsvorrichtung 112, eine steuerbare Außenbeleuchtungsvorrichtung 114 und ein steuerbares Fernsehgerät 116 dargestellt. Steuerbar meint, dass der Verbraucher bzw. der Aktor zumindest aktivierbar und deaktivierbar ist.

Es versteht sich, dass weitere und/oder andere steuerbaren Aktoren, wie mindestens ein Motor einer Verschattungsvorrichtung, mindestens ein steuerbares Ventil eines Heizungskörpers etc., vorgesehen sein können. Insbesondere kann der mindestens eine Verbraucher 112, 114, 116 durch die Hausautomationssteuervorrichtung 102 gesteuert werden, abhängig von ausgewerteten Sensordaten (z.B. nicht gezeigter Helligkeitssensor, Bewegungssensor, Temperatursensor etc.), externen Messdaten (z.B. meteorologischen Daten) und/oder Nutzervorgaben und/oder Nutzereingaben (z.B. an einem mit der Hausautomationssteuervorrichtung 102 verbindbaren Nutzerendgerät).

Vorzugsweise ist der mindestens eine Verbraucher 112, 114, 116 kommunikativ mit der Hausautomationssteuervorrichtung 102 über ein drahtloses Netzwerk 106 verbunden. Das drahtlose Netzwerk 106 kann beispielsweise auf der Bluetooth-Technologie oder der WLAN-Technologie basieren. Auch können zwei oder mehr (unterschiedliche) Netzwerke in einem Hausautomationssystem vorhanden sein. Insbesondere kann die Hausautomationssteuervorrichtung 102 und der mindestens eine Verbraucher 112, 114, 116 jeweils über mindestens geeignete Kommunikationsschnittstelle verfügen, um über das mindestens eine Netzwerk zu kommunizieren. Es versteht sich, dass alternativ oder zusätzlich andere Technologien eingesetzt werden können.

Darüber hinaus umfasst das Hausautomationssystem 100 eine Körperschalldetektionsvorrichtung 104. Vorliegend ist genau eine Körperschalldetektionsvorrichtung 104 in dem Gebäude 108 angeordnet. Die Körperschalldetektionsvorrichtung 104 ist zumindest an einer Gebäudewand 110 des Gebäudes 108 angeordnet, insbesondere befestigt. Anders ausgedrückt steht die Körperschalldetektionsvorrichtung 104 zumindest abschnittsweise mit der Gebäudewand 110 in direktem Kontakt.

Die Körperschalldetektionsvorrichtung 104 ist vorzugsweise im Wesentlichen in einem Gebäudezentrumsbereich 118 angeordnet. Anders ausgedrückt ist die Körperschalldetektionsvorrichtung 104 vorliegend an einem Gebäudewandabschnitt einer Gebäudewand 110 angeordnet, der im Wesentlichen in dem Gebäudezentrumsbereich 118 liegt. Der Gebäudezentrumsbereich 118 kann insbesondere der Bereich sein, bei dem ein Körperschallsignal von sämtlichen Außenwänden im Wesentlichen den gleichen Laufweg zu diesem Bereich hat (z.B. mit einer Toleranz von 20 % von dem mittleren Laufweg)

Die Körperschalldetektionsvorrichtung 104 ist kommunikativ mit der Hausautomationssteuervorrichtung 102 verbunden, vorzugsweise über das zuvor beschriebene (lokale bzw. Nahbereichs-) Netzwerk 106.

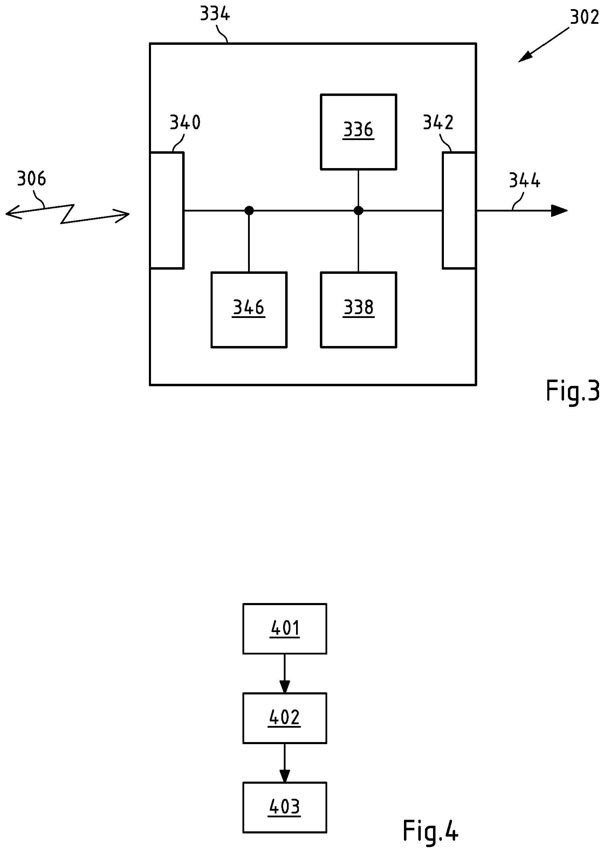

Die Körperschalldetektionsvorrichtung 104 ist eingerichtet zum Erfassen mindestens eines über die mindestens eine Gebäudewand 110 übertragenen Körperschallsignals. Vorzugsweise kann die Körperschalldetektionsvorrichtung 104 mindestens einen Körperschallsensor und eine Kommunikationsschnittstelle aufweisen. Ein durch den Körperschallsensor erfasstes Körperschallsignal kann unter Nutzung der Kommunikationsschnittstelle an die Hausautomationssteuervorrichtung 102 übertragen, insbesondere übermittelt werden. Die Funktionsweise des Hausautomationssystems 100 wird nachfolgend mit Hilfe der Figur 4 näher beschrieben.

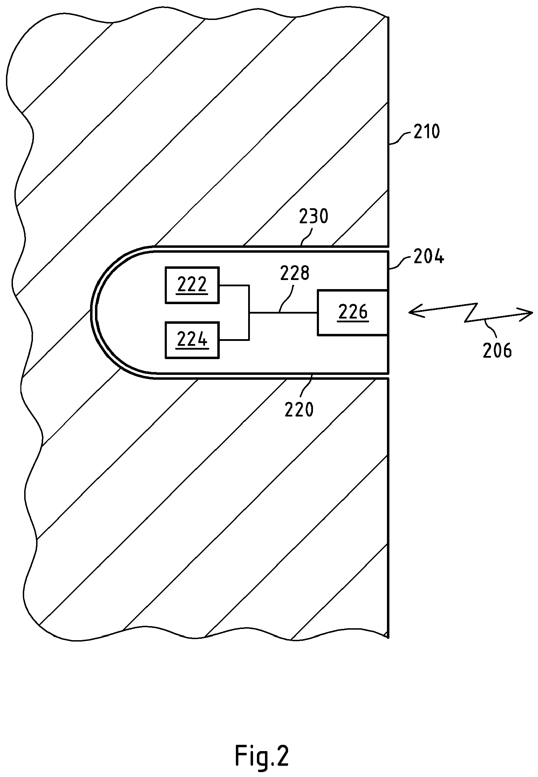

Die Figur 2 zeigt eine schematische Ansicht eines Ausführungsbeispiels einer Körperschalldetektionsvorrichtung 204 gemäß der vorliegenden Anmeldung. Insbesondere ist die Körperschalldetektionsvorrichtung 204 in einem installierten Zustand dargestellt.

In dem dargestellten bevorzugten Ausführungsbeispiel weist die Körperschalldetektionsvorrichtung 204 ein zylinderförmiges Gehäuse 220 auf. In dem Gehäuse 220 kann mindestens ein Körperschallsensor 222, 224 und mindestens eine Kommunikationsschnittstelle 226 integriert sein. Die Kommunikationsschnittstelle 226 ist insbesondere eine drahtlose Kommunikationsschnittstelle 226. Die Kommunikationsschnittstelle 226 kann eingerichtet sein zum Senden (und/oder Empfangen) von Daten über das Netzwerk 206 bzw. Kommunikationsnetz 206.

Intern kann die Kommunikationsschnittstelle 226 kommunikativ mit dem mindestens einen Körperschallsensor 222, 224 (z.B. ein Piezosensor) über eine Kommunikationsverbindung 228 gekoppelt sein. Ein von einem Körperschallsensor 222, 224 erfasstes Körperschallsignal wird (in geeigneter Form) von dem Körperschallsensor 222, 224 über die Kommunikationsverbindung 228 der Kommunikationsschnittstelle 226 bereitgestellt, um ein Aussenden des erfassten Körperschallsignals bzw. eines entsprechenden Datensatzes zu ermöglichen.

In dem vorliegenden Ausführungsbeispiel weist die Körperschalldetektionsvorrichtung 204 mindestens einen ersten Körperschallsensor 222 und mindestens einen zweiten Körperschallsensor 224 auf. Der erste Körperschallsensor 222 kann angeordnet sein zum Erfassen von sich in einer ersten Ebene ausbreitenden Körperschallwellen. Der zweite Körperschallsensor 224 kann angeordnet sein zum Erfassen von sich in einer zweiten Ebene ausbreitenden Körperschallwellen, wobei die zweite Ebene im Wesentlichen senkrecht zu der ersten Ebene ist.

Beispielsweise kann das Ausführungsbeispiel nach Figur 2 in dem Ausführungsbeispiel des Hausautomationssystems nach Figur 1 eingesetzt werden.

Die Figur 3 zeigt eine schematische Ansicht eines Ausführungsbeispiels einer Hausautomationssteuervorrichtung 302 gemäß der vorliegenden Anmeldung. Beispielsweise kann das Ausführungsbeispiel nach Figur 3 in dem Ausführungsbeispiel des Hausautomationssystems nach Figur 1 eingesetzt werden.

Die Hausautomationssteuervorrichtung 302 weist vorzugsweise ein Gehäuse 334 auf. In dem Gehäuse 334 können eine erste Kommunikationsschnittstelle 340, eine weitere (optionale) Kommunikationsschnittstelle 342, ein Auswertemodul 336, ein (optionales) Schallmusteraufzeichnungsmodul 346 und eine Speichereinrichtung 338 integriert sein.

Die erste Kommunikationsschnittstelle 340 ist insbesondere eine drahtlose Kommunikationsschnittstelle 340. Die Kommunikationsschnittstelle 340 kann eingerichtet sein zum Empfangen (und/oder Senden) von Daten über das Netzwerk 306 bzw. Kommunikationsnetz 306. Beispielsweise kann die erste Kommunikationsschnittstelle 340 eingerichtet sein zum Empfangen eines durch eine Körperschalldetektionsvorrichtung erfassten Köperschallsignals bzw. entsprechenden Datensatzes.

Die weitere Kommunikationsschnittstelle 342 kann beispielsweise eine drahtgebundene oder drahtlose Kommunikationsschnittstelle 342 sein. Die weitere Kommunikationsschnittstelle 342 kann eingerichtet sein zum Kommunizieren über ein Fernkommunikationsnetz 344, beispielsweise zum Austauschen von Daten mit einem (nicht gezeigten) Backenendsystem.

Ferner ist ein Auswertemodul 336 vorgesehen, das eingerichtet ist zum Auswerten eines durch die Körperschalldetektionsvorrichtung erfassten Köperschallsignals, insbesondere basierend auf mindestens einem Auswertekriterium. Das mindestens eine Auswertekriterium kann in der Speichereinrichtung 338 gespeichert sein. Ein beispielhafter Auswertevorgang wird nachfolgend mit Hilfe der Figur 4 näher beschrieben.

Wie bereits beschrieben wurde, kann die Hausautomationssteuervorrichtung 302 zumindest teilweise Hardwareelemente (z.B. Prozessor, Speichermittel etc.) und/oder zumindest teilweise Softwareelemente (z.B. ausführbaren Code) (z.B. das Auswertemodul) umfassen. Ferner versteht es sich, dass das Auswertemodul zumindest teilweise in einem Backensystem angeordnet sein kann und/oder die Speichereinrichtung zumindest teilweise in einem Backendsystem angeordnet sein kann.

Das Schallmusteraufzeichnungsmodul 346 kann insbesondere eingerichtet sein, in einem Kalibrierungsmodus, mindestens ein Körperschallsignal, das durch mindestens eine Simulationsaktion ausgelöst wird, als Schallsignalmusters aufzuzeichnen und insbesondere in der Speichereinrichtung 338 zu speichern.

Die Figur 4 zeigt ein Diagramm eines Ausführungsbeispiels eines Verfahrens gemäß der vorliegenden Anmeldung. Insbesondere kann das Verfahren zum Betreiben eines Hausautomationssystems nach Figur 1 verwendet werden, beispielsweise umfassend das Ausführungsbeispiel nach Figur 2 und/oder das Ausführungsbeispiel nach Figur 3.

Ein erster Schritt 401 kann ein Erfassen eines über mindestens eine Gebäudewand übertragenen Körperschallsignals sein. Vorzugsweise kann ein Körperschallsensor einer Körperschalldetektionsvorrichtung ein Körperschallsignal erfassen. Das erfasste Körperschallsignal bzw. ein entsprechender Datensatz kann vorzugsweise für eine Auswertung von der Körperschalldetektionsvorrichtung an eine Hausautomationssteuervorrichtung übertragen werden.

Ein nächster Schritt 402 ist ein Auswerten, durch ein Auswertemodul der Hausautomationssteuervorrichtung, des erfassten Köperschallsignals, basierend auf mindestens einem Auswertekriterium. Das mindestens eine Auswertekriterium ist vorzugsweise ein Schallsignalmuster. Vorzugsweise kann eine Vielzahl von (derartigen) Auswertekriterien in der Speichereinrichtung gespeichert sein.

Ein unzulässiges Schallsignalmuster repräsentiert insbesondere ein Schallmuster, welches durch eine Einbruchsaktivität (z.B. Aufbrechen einer Tür, Einschlagen eines Fensters etc.) ausgelöst wird. Beispielsweise kann ein Schallsignalmuster vorab durch Tests ermittelt worden sein und beispielsweise werkseitig in der Speichereinrichtung gespeichert werden.

Vorteilhafterweise kann in einem optionalen Kalibrierungsschritt in einem Kalibrierungsmodus mindestens ein Schallsignalmuster aufgezeichnet werden, basierend auf einer Simulation von mindestens einer Einbruchsaktivität. Vorzugsweise kann eine Vielzahl von unterschiedlichen Einbruchsaktivitäten simuliert werden und das jeweils resultierende Schallsignal als unzulässiges Schallsignalmuster in der Speichereinrichtung gespeichert werden.

Alternativ oder zusätzlich können auch Nicht-Einbruchsaktivitäten simuliert und die jeweils resultierenden Körperschallsignale als zulässige Schallsignalmuster aufgezeichnet und insbesondere in der Speichereinrichtung gespeichert werden. Hierbei kann ein Schallsignalmuster, welches auf einer Einbruchsaktivität basiert, als unzulässiges Schallsignalmuster und ein Schallsignalmuster, welches auf einer Nicht-Einbruchsaktivität basiert, als zulässiges Schallsignalmuster bezeichnet werden.

Bei einer bevorzugten Ausführungsform kann das Auswertemodul (und die Speichereinrichtung) durch ein (selbstlernendes) KI-Modul gebildet sein.

Das Auswerten in Schritt 402 umfasst insbesondere ein Vergleichen eines erfassten Körperschallsignals (insbesondere in Form eines Frequenzsignals (z.B. ein Frequenzspektrum)) mit dem mindestens einen, beispielsweise unzulässigen Schallsignalmuster, umfassen. Wird eine Korrespondenz mit einem unzulässigen Schallsignalmuster festgestellt, so kann als Auswerteergebnis ein Einbruchsversuch detektiert werden. Wird hingegen keine Korrespondenz mit einem unzulässigen Schallsignalmuster festgestellt, so kann als Auswerteergebnis detektiert werden, dass kein Einbruchsversuch vorliegt.

Es versteht sich, dass, wenn beispielsweise nur zulässige Schallsignalmuster gespeichert sind, ein Einbruchsversuch als Auswerteergebnis detektiert wird, wenn keine Korrespondenz vorliegt.

Unter der Detektion einer Korrespondenz ist insbesondere zu verstehen, dass ein erfasstes Körperschallsignal, insbesondere das Frequenzmuster, mit einem Schallsignalmuster, insbesondere dem Frequenzmuster, im Wesentlichen übereinstimmt. Die Amplitude kann unterschiedlich sein.

Es versteht sich, dass alternativ oder zusätzlich weitere Auswertekriterien vorgesehen sein können.

Ein weiterer Schritt 403 ist ein Ausführen mindestens einer vorbestimmten Aktion in Abhängigkeit des Auswerteergebnisses. Wenn in Schritt 402 festgestellt wird, dass ein (potentieller) Einbruchsversuch vorliegt, kann insbesondere das Auswertemodul das Ausführen mindestens einer vorbestimmten Aktion bewirken.

Das Ausführen der vorbestimmten Aktion kann insbesondere ein Aktivieren von mindestens einem (elektrischen) Verbraucher des Gebäudes umfassen. Beispielsweise kann mindestens eine Beleuchtungsvorrichtung und/oder mindestens ein Fernsehgerät aktiviert werden, indem beispielsweise die Hausautomationssteuervorrichtung mindestens ein Steuersignal mit einem Aktivierungsbefehl an den mindestens einen Verbraucher aussendet. Alternativ oder zusätzlich kann mindestens eine Verschattungseinrichtung aktiviert werden, also insbesondere ein Rollladen (oder dergleichen) heruntergefahren werden (indem beispielsweise die Hausautomationssteuervorrichtung mindestens ein Steuersignal mit einem Aktivierungsbefehl an den mindestens einen Verbraucher aussendet).

Alternativ oder zusätzlich kann Alarm ausgelöst werden. Beispielsweise kann die Hausautomationssteuervorrichtung einen Alarmgeber und/oder ein Nutzerendgerät ansteuern und/oder die Polizei (und/oder eine private Sicherheitsfirma) benachrichtigen.

Ergibt die Auswertung in Schritt 402, dass kein (potentieller) Einbruchsversuch vorliegt, so kann das Verfahren beendet werden (und mit Schritt 401 fortgesetzt werden).

Wie bereits beschrieben wurde, können viele Aktivitäten bei einem Einbruch in der festen Bausubstanz einen Körperschall hervorrufen. Das Einschlagen eines Fensters oder das Aufbrechen einer Tür löst meistens ein spezifisches Schallsignal, insbesondere einen spezifischen Schallimpuls. aus. Wird die Bausubstanz nun mit eine Körperschalldetektionsvorrichtung, umfassend einen Körperschallsensor insbesondere in Form eines Körperschallmikrofons beobachtet, können diese Schallsignale - vor allem bei Abwesenheit der Bewohner (die ja auch vielleicht solche Körperschallereignisse erzeugen könnten) - analysiert und durch einen geeigneten adaptiven Algorithmus bewertet werden, der in dem Auswertemodul implementiert sein kann.

Der Algorithmus entscheidet dann insbesondere ob das entsprechende Körperschallereignis eine Alarmierung nach sich zieht (oder nicht).

Der große Vorteil dieser Vorgehensweise ist, dass nicht mehr an jedem Fenster / Tür ein Erschütterungssensor notwendig ist. Außerdem kann ein Köperschallmikrofon für Außenstehende unsichtbar montiert werden.

Insbesondere weist die Anmeldung folgende Vorteile auf:
- Sicherer Erkennung von Einbruchsgeräuschen im ganzen Haus durch Körperschall
- Unsichtbare Montage möglich
- Einsparung von lokalen Sensoren
- Minimale Installation
- Sicherheitsgewinn für den Kunden
- Integrierbar in Smart Home bzw. einem bereits vorhandenen Hausautomationssystem

## Patentansprüche

1. Hausautomationssystem (100) für ein Gebäude (108), umfassend:
- mindestens eine Hausautomationssteuervorrichtung (102, 302), und
- mindestens eine mit der Hausautomationssteuervorrichtung (102, 302) kommunikativ verbundene Körperschalldetektionsvorrichtung (104, 204),
- wobei die Körperschalldetektionsvorrichtung (104, 204) zumindest an einer Gebäudewand (110, 210) des Gebäudes (108) angeordnet ist, und
- wobei die Körperschalldetektionsvorrichtung (104, 204) eingerichtet ist zum Erfassen mindestens eines über die mindestens eine Gebäudewand (110, 210) übertragenen Körperschallsignals.

2. Hausautomationssystem (100) nach Anspruch 1, **dadurch gekennzeichnet, dass**
- die Hausautomationssteuervorrichtung (102, 302) mindestens ein Auswertemodul (336) aufweist,
- wobei das Auswertemodul (332) eingerichtet ist zum Auswerten des durch die Körperschalldetektionsvorrichtung (104, 204) erfassten Köperschallsignals, basierend auf mindestens einem Auswertekriterium.

3. Hausautomationssystem (100) nach Anspruch 2, **dadurch gekennzeichnet, dass**
- das Hausautomationssystem (100) mindestens eine durch die Hausautomationssteuervorrichtung (102, 302) zumindest zugreifbare Speichereinrichtung (338) umfasst,
- wobei die Speichereinrichtung (338) eingerichtet ist zum Speichern von mindestens einem Schallsignalmuster als Auswertekriterium, und
- wobei das Auswertemodul (336) eingerichtet ist zum Auswerten des durch die Körperschalldetektionsvorrichtung (104, 204) erfassten Köperschallsignals durch Vergleichen des erfassten Köperschallsignals mit dem mindestens einen gespeicherten Schallsignalmuster.

4. Hausautomationssystem (100) nach Anspruch 2 oder 3, **dadurch gekennzeichnet, dass**
- das Hausautomationssystem (100) in einem Kalibrierungsmodus betreibbar ist, und
- die Hausautomationssteuervorrichtung (102, 302) mindestens ein Schallmusteraufzeichnungsmodul (346) aufweist,
- wobei, in dem Kalibrierungsmodus, das Schallmusteraufzeichnungsmodul (346) eingerichtet ist zum Aufzeichnen mindestens eines Körperschallsignals, das durch mindestens eine Simulationsaktion ausgelöst wird, als Schallsignalmuster.

5. Hausautomationssystem (100) nach einem der Ansprüche 2 bis 4, **dadurch gekennzeichnet, dass**
- das Auswertemodul (336) eingerichtet ist zum Bewirken eines Ausführens mindestens einer vorbestimmten Aktion in Abhängigkeit des Auswerteergebnisses,
- wobei die mindestens eine vorbestimmte Aktion ein Aktivieren mindestens eines Verbrauchers (112, 114, 116) des Gebäudes (108) ist,
- wobei der mindestens eine elektrischen Verbraucher (112, 114, 116) insbesondere ein Fernsehgerät (116), eine Beleuchtungsvorrichtung (112, 114) und/oder eine Verschattungsvorrichtung ist.

6. Hausautomationssystem (100) nach einem der vorherigen Ansprüche, **dadurch gekennzeichnet, dass**
- die Körperschalldetektionsvorrichtung (104, 204) ein zylinderförmiges Gehäuse (230) aufweist, und
- in dem zylinderförmigen Gehäuse (220) mindestens ein Körperschallsensor (222, 224) und mindestens eine Kommunikationsschnittstelle (226) integriert ist.

7. Hausautomationssystem (100) nach einem der vorherigen Ansprüche, **dadurch gekennzeichnet, dass**
- die Körperschalldetektionsvorrichtung (104, 204) in der Gebäudewand (110, 210) integriert ist, insbesondere in einem in der Gebäudewand (110, 210) gebildeten Bohrloch (230) eingesetzt ist.

8. Hausautomationssystem (100) nach einem der vorherigen Ansprüche, **dadurch gekennzeichnet, dass**
- die Körperschalldetektionsvorrichtung (104, 204) im Wesentlichen in einem Gebäudezentrumsbereich (118) angeordnet ist.

9. Hausautomationssystem (100) nach einem der vorherigen Ansprüche, **dadurch gekennzeichnet, dass**
- die Körperschalldetektionsvorrichtung (104, 204) mindestens einen ersten Körperschallsensor (222) und mindestens einen zweiten Körperschallsensor (224) aufweist,
- wobei der erste Körperschallsensor (222) angeordnet ist zum Erfassen von sich in einer ersten Ebene ausbreitenden Körperschallwellen, und
- wobei der zweite Körperschallsensor (224) angeordnet ist zum Erfassen von sich in einer zweiten Ebene ausbreitenden Körperschallwellen, wobei die zweite Ebene im Wesentlichen senkrecht zu der ersten Ebene ist.

10. Verfahren zum Betreiben eines Hausautomationssystems (100), insbesondere eines Hausautomationssystems (100) nach einem der vorherigen Ansprüche, umfassend:
- Erfassen eines über mindestens eine Gebäudewand (110, 210) übertragenen Körperschallsignals,
- Auswerten, durch ein Auswertemodul (336) einer Hausautomationssteuervorrichtung (102, 302), des erfassten Köperschallsignals, basierend auf mindestens einem Auswertekriterium, und
- Ausführen mindestens einer vorbestimmten Aktion in Abhängigkeit des Auswerteergebnisses.
